# EUROPÄISCHE PATENTSCHRIFT

(11) **EP 2 274 125 B1**
(45) Veröffentlichungstag und Bekanntmachung des Hinweises auf die Patenterteilung: **29.02.2012**
(21) Anmeldenummer: 09728145.5
(22) Anmeldetag: 02.04.2009
(51) Int. Cl.: B23B 51/02

(54) **DREHWERKZEUG, INSBESONDERE BOHRWERKZEUG**
LATHE TOOL, IN PARTICULAR BORING TOOL
OUTIL DE TOURNAGE, NOTAMMENT OUTIL DE FORAGE

(30) Priorität: 03.04.2008 DE 102008017540; 06.06.2008 DE 102008027159
(43) Veröffentlichungstag der Anmeldung: 19.01.2011
(60) Teilanmeldung: 10009426.7
(73) Patentinhaber: Kennametal Inc., Latrobe, PA 15650-0231 (US)
(72) Erfinder: JÄGER, Horst, Manfred, 90451 Nürnberg (DE); ZEUG, Berthold, Heinrich, 90762 Fürth (DE)
(74) Vertreter: FDST Patentanwälte
(86) Internationale Anmeldenummer: PCT/EP2009/002405
(87) Internationale Veröffentlichungsnummer: WO 2009/121595

(56) Entgegenhaltungen:
- EP-A- 1 319 483
- EP-A- 1 524 052
- DE-A1-102006 012 382
- DE-C1- 19 914 170
- US-A- 2 259 611

## Beschreibung

### Hintergrund der Erfindung

Die Erfindung betrifft ein rotierendes Zerspanungswerkzeug, insbesondere ein Bohrwerkzeug, mit einem Aufnahmeteil und einem Frontteil, die sich entlang einer Mittenachse erstrecken und über eine Mitnehmerverbindung lösbar aneinander befestigt sind.

Ein derartiges als Bohrwerkzeug ausgebildetes Zerspanungswerkzeug ist aus der WO 2007/107294 A1 zu entnehmen. Bei diesem Bohrwerkzeug handelt es sich um ein modulares Zerspanungswerkzeug, welches einen austauschbaren Werkzeugkopf aufweist, der mit einem genuteten Bohrkörper über die Mitnehmerverbindung lösbar verbindbar ist. Die Mitnehmerverbindung umfasst hierbei einen an der Unterseite des Bohrkopfs angeordneten und sich quer über eine Mittenlängsachse erstreckenden Mitnehmersteg. Dieser wird in eine zu der Form des Mitnehmerstegs korrespondierende Aufnahmetasche des Bohrkörpers eingesetzt. Die Aufnahmetasche umschließt hierbei den Mitnehmersteg vollumfänglich.

Die Mitnehmerverbindung dient allgemein zur Drehmomentübertragung zwischen den beiden Werkzeugteilen. Bei derartigen Mitnehmerverbindungen besteht oftmals ein Konflikt zwischen einem möglichst stabilen Mitnehmersteg für die Drehmomentübertragung und einer möglichst geringen Schwächung des Bohrkörpers.

Aus der US-A-2,259,611 ist ein Werkzeug gemäß dem Oberbegriff des Anspruchs 1 bekannt. Als nachteilig hierbei wird die hohe erforderliche Maß- und Formgenauigkeit der Kupplungspaare angesehen, die für ein einwandfreies Funktionieren erforderlich ist.

### Aufgabe der Erfindung

Der Erfindung liegt die Aufgabe zugrunde, ein Werkzeug der eingangs genannten Art mit einer verbesserten Mitnehmerverbindung anzugeben, die für die Übertragung hoher Drehmomente ausgelegt ist und zugleich lediglich eine geringe Schwächung des Aufnahmeteils bewirkt, um so einen stabilen Rücklauf des Werkzeugs zu gewährleisten.

### Lösung der Aufgabe

Die Aufgabe wird gemäß der Erfindung gelöst durch ein Werkzeug mit den Merkmalen des Anspruchs 1. Bei dem Werkzeug handelt es sich allgemein um ein Rotationswerkzeug für eine spanende Bearbeitung eines Werkstücks. Das Werkzeug ist mehrteilig, insbesondere zweiteilig ausgebildet und umfasst einen Aufnahmeteil und einen Frontteil. Im Falle eines Bohrwerkzeugs ist der Aufnahmeteil der Bohrkörper und der Frontteil der Bohrkopf. Im Falle eines Fräserwerkzeugs wäre der Aufnahmeteil ein Fräserschaft und der Frontteil ein Fräserkopf. Diese beiden sich entlang einer Mittenachse (Axialrichtung) erstreckenden Teile sind über eine Mitnehmerverbindung lösbar aneinander befestigt. Diese weist zwei voneinander getrennte und bezüglich der Mittenachse exzentrisch angeordnete Kupplungspaare auf. Jedes der Kupplungspaare ist hierbei gebildet durch zwei ineinandergreifende Kupplungselemente, nämlich einerseits ein Mitnehmerzapfen und andererseits eine diesen vollständig umschließende Aufnahmetasche. Die Kupplungselemente dienen zum einen zur Übertragung der Drehmomentkräfte zwischen den beiden Teilen. Zum anderen dienen die beiden Kupplungselemente auch zum fluchtenden Ausrichten der beiden Teile miteinander, d.h. über die Kupplungselemente werden die beiden Teile zueinander und bezüglich der Mittenachse zentriert. Im Hinblick auf diese Doppelfunktion sind die Kupplungselemente asymmetrisch ausgebildet und verbreitern sich - in der Ebene senkrecht zur Mittenachse gesehen - mit zunehmendem Abstand zur Mittenachse. Durch die asymmetrische Ausgestaltung wird insbesondere die bei dem Zusammenfügen der beiden Teile eine automatische Zentrierung der beiden Teile erreicht. Gleichzeitig wird mit der Verbreiterung mit zunehmendem radialen Abstand von der Mittenachse die Mitnehmerverbindung in den radial äußeren Bereichen besonders stark ausgebildet, so dass hohe Drehmomentkräfte übertragen werden können.

Unter asymmetrischer Ausgestaltung der Kupplungselemente wird hierbei insbesondere verstanden, dass diese eine senkrecht zur Mittenachse orientierte Querschnittsfläche aufweisen, die weder bezüglich einer Drehachse noch bezüglich einer Ebene eine Symmetrie aufweisen.

Ein besonderer Vorteil dieser Ausgestaltung ist darin zu sehen, dass die beiden Kupplungspaare voneinander getrennt sind und jeweils exzentrisch bezüglich der Mittenachse angeordnet sind. Im Bereich der Mittenachse selbst ist daher durch die Mitnehmerverbindung keine Änderung am Aufnahmeteil oder am Frontteil vorgesehen. Vorzugsweise liegen die beiden Teile im Bereich der Mittenachse plan aufeinander auf, ohne dass sie in diesem Bereich ineinander greifen. Die einzelnen Kupplungspaare sind daher in einen radial äußeren Bereich verlagert. Dadurch bleibt der Kern des Werkzeuges von der Mitnehmerverbindung unberührt.

Im Hinblick auf die angestrebte Selbstzentrierung der beiden Werkzeugteile zueinander weisen die beiden Kupplungselemente für die Montage ein Spiel zueinander und zudem unterschiedliche Querschnittsgeometrien auf, derart, dass eine geringfügige Relativbewegung zwischen den beiden ineinandergesteckten Kupplungselementen ermöglicht ist. Bei einer solchen Relativdrehung werden die Kupplungselemente gegeneinander verspannt. Vorzugsweise kommen hierbei die gekrümmten Außenanlageflächen gegeneinander zum Anliegen. Da sich die beiden Kupplungselemente über die Außenanlageflächen in radialer Richtung aneinander abstützen wird durch diese Maßnahme auf den jeweiligen Mitnehmerzapfen eine radial nach Innen gerichtete Kraftkomponente ausgeübt. Da dies bei jedem Kupplungspaar erfolgt, führt dies zu der gewünschten automatischen Zentrierung der beiden Werkzeugteile.

Untersuchungen haben gezeigt, dass diese Ausgestaltung mit den zwei exzentrisch und voneinander getrennten Kupplungspaaren im Vergleich zu der Ausgestaltung, wie sie in der WO 2007/107294 A1 beschrieben ist zu einer Reduzierung des Spannungen im Bohrkörper, also im Aufnahmeteil führen. Die Belastung des Aufnahmeteils - bei gleicher oder verbesserter Drehmomentübertragung - wird um etwa 20% reduziert. Weiterhin ist durch die getrennte Anordnung der Mittenbereich frei, in dem nunmehr problemlos Kühlmittelbohrungen, Spannschrauben etc. eingebracht werden können. Zudem ermöglicht der vergrößerte Freiraum im Bereich um die Mittenachse eine größere Gestaltungsfreiheit im Hinblick auf die Ausgestaltung insbesondere der Spannuten. Diese können nunmehr deutlich näher an die Mittenachse herangeführt werden.

Gemäß einer zweckdienlichen Ausgestaltung ist der Mitnehmerzapfen hierbei nach Art eines Prismas ausgebildet. In gleicher Weise ist auch die Aufnahmetasche angepasst an den Mitnehmerzapfen als eine prismatische Aufnahme ausgebildet.

Unter nach Art eines Prismas ausgebildet wird verstanden, dass die beiden Kupplungselemente jeweils eine in etwa polygonale Grundfläche mit vorzugsweise parallel zur Mittenachse sich erstreckende Seitenwände aufweisen. Insbesondere ist eine Grundfläche mit 4 Eckbereichen vorgesehen. Die Eckbereiche sind hierbei zweckdienlicher Weise gerundet ausgebildet. Auch die Verbindung zwischen den einzelnen Eckbereichen muss nicht zwangsläufig geradlinig erfolgen.

Der besondere Vorteil dieser prismatischen Ausgestaltung ist darin zu sehen, dass benachbarte Seitenwände zur automatischen Fixierung bzw. Zentrierung der beiden Teile dienen. Im Sinne einer möglichst stabilen Ausbildung ist hierbei vorzugsweise vorgesehen, dass die Ausdehnung des jeweiligen Mitnehmerzapfens in radialer Richtung vorzugsweise mehr als 50% des Radius des Werkzeugs beträgt. Die beiden Kupplungselemente sind zueinander vorzugsweise rotationssymmetrisch bezüglich einer Drehung um die Mittenachse ausgebildet. Bei der bevorzugten Ausgestaltung mit zwei Kupplungspaaren sind die Kupplungselemente daher bezüglich einer Drehung um die Mittenachse um 180° symmetrisch zueinander ausgebildet. Alternativ hierzu besteht prinzipiell auch die Möglichkeit, die Kupplungselemente unsymmetrisch zueinander auszubilden.

Gemäß einer zweckdienlichen Weiterbildung ist vorgesehen, dass die Kupplungselemente jeweils radial außenliegende, insbesondere gekrümmte Außenanlageflächen sowie weitere Mitnehmerflächen umfassen. Im Lastfall, also bei einer Drehmomentübertragung, werden sowohl die Außenanlageflächen als auch die Mitnehmerflächen der beiden ineinandergesteckten Kupplungselemente gegeneinander gepresst. Die Außenanlageflächen und die Mitnehmerflächen sind hierbei voneinander getrennt. Zweckdienlicherweise bilden sie benachbarte Seitenflächen des Prismas, über die die Selbstzentrierung erfolgt.

Vorzugsweise sind hierbei die Mitnehmerflächen im Wesentlichen in radialer Richtung orientiert, um eine möglichst optimale Kraftübertragung für die Drehmomentmitnahme zu ermöglichen. Unter im Wesentlichen in radialer Richtung orientiert wird hierbei insbesondere verstanden, dass die Mitnehmerflächen bezüglich der Radialen maximal bis unter einem Winkel +/- 20°, vorzugsweise +/- 10° orientiert sind.

Zweckdienlicherweise weist die Aufnahmetasche einen die Außenanlagefläche umfassenden Außensteg auf, der sich in Richtung zu im Lastfall belastete Bereich der Außenanlagefläche verbreitert. Der Außensteg bildet mit seiner Außenseite hierbei zugleich auch die Außenseite des Werkzeugs. Die im Wesentlichen konzentrisch zu der Außenmantelfläche des Werkzeugs verlaufende Außenanlagefläche weicht daher gemäß der bevorzugten Ausgestaltung von der konzentrischen Anordnung dahingehend ab, dass die Breite des Wandungsbereichs zu den belastenden Bereichen hin zunimmt.

Bevorzugt umfasst die Aufnahmetasche zumindest einen stegartigen und elastischen Wandungsbereich. Dieser ist ausreichend dünn und damit elastisch, so dass im Lastfall beim Auftreten der Drehmomentkräfte eine elastische Verformung des Wandbereichs erfolgen kann, so dass ein Flächenkontakt zwischen dem elastischen Wandungsbereich und einem zugeordneten Flächenabschnitt des Mitnehmerzapfens ausgebildet wird. Aufgrund dieser Ausgestaltung erfolgt daher ein automatischer Toleranzausgleich zwischen den beiden Kontaktflächen zwischen dem Mitnehmerzapfen und der Aufnahmetasche, um eine gewünschte flächige Anlagefläche für die Drehmomentübertragung zu erzielen. Derartige Toleranzungenauigkeiten sind beispielsweise bedingt durch Maßungenauigkeiten beim Herstellen der Aufnahmetasche und / oder des Mitnehmerzapfens. Hierbei ist zu berücksichtigen, dass das Aufnahmeteil (Bohrkörper) für viele Frontteile (Bohrerköpfe) ausgelegt ist, die Verschleißteile darstellen.

Allgemein sind die den Mitnehmerzapfen umgebende Wandungsbereiche der Aufnahmetasche stegartig mit einer im Vergleich zu dem Mitnehmerzapfen geringen Breite ausgebildet.

Vorzugsweise sind die Außenanlageflächen der beiden Kupplungselemente eines Kupplungspaares zueinander exzentrisch angeordnet. Darunter wird verstanden, dass die Außenanlageflächen entlang einer Kreisbahn mit definiertem Krümmungsradius verlaufen, wobei die Mittelpunkte der Kreise versetzt zueinander angeordnet sind. Ergänzend können auch unterschiedliche Krümmungsradien für die Außenanlageflächen vorgesehen sein.

Vorzugsweise ist das Spiel der beiden Kupplungselemente derart gewählt, dass die beiden Kupplungselemente einen freien Verdrehwinkel im Bereich von 1 ° bis 5° aufweisen, das heißt sie können in einem begrenzten Winkelbereich von maximal 1° bis 5° zueinander verdreht werden.

Durch den Mitnehmerzapfen erstreckt sich zumindest eine im Wesentlichen in Axialrichtung verlaufende Bohrung, die mit einer korrespondierenden Bohrung in der Aufnahmetasche fluchtet. Diese Bohrung ist vorzugsweise eine Kühlmittelbohrung oder auch eine Bohrung für die Aufnahme eines Befestigungsmittels wie beispielsweise eine Schraube. Zweckdienlicherweise sind im Mitnehmerzapfen zwei Bohrungen, nämlich eine für ein Kühlmittel und eine für ein Befestigungsmittel, insbesondere Spannschraube vorgesehen. Beide fluchten mit entsprechenden Bohrungen in der Aufnahmetasche.

Die zur Aufnahme der Spannschraube vorgesehene Bohrung ist dabei zweckdienlicherweise schräg bezüglich der Längsrichtung orientiert, und zwar derart, dass beim Anziehen der Spannschraube die beiden Kupplungselemente gegeneinander verspannt werden. Die Schrägstellung ist hierbei derart gewählt, dass vorzugsweise ein Verspannen sowohl in Umfangsrichtung als auch in Axialrichtung erfolgt. Die Längsachse der Bohrung ist hierbei etwa in Umfangsrichtung geneigt, genauer in Spannrichtung, in der der Mitnehmerzapfen gegen die Aufnahmetasche verspannt ist. Die Längsachse der Bohrung verläuft also innerhalb etwa einer Tangentialebene, genauer innerhalb der Ebene, die von der Axialrichtung und der Spannrichtung aufgespannt ist. Die in dieser Ebene liegende Bohrungslängsachse weist einen Neigungswinkel bezüglich der Axialrichtung größer von 1 ° im Bereich zwischen 3° und 20°und vorzugsweise im Bereich von etwa 10° auf.

Gemäß einer zweckdienlichen Ausgestaltung ist zwischen der Aufnahmetasche und dem Mitnehmerzapfen ein sich vorzugsweise in Axialrichtung parallel zur Mittenachse erstreckendes Ausgleichselement angeordnet, dass im Lastfall flächig sowohl am Mitnehmerzapfen als auch an der Aufnahmetasche anliegt. Im Lastfall wird daher eine vom Mitnehmerzapfen ausgeübte Kraft auf die Aufnahmetasche übertragen. Das Ausgleichselement ist hierbei um seine Längsachse insbesondere frei drehbar. Dieses Ausgleichselement dient zum Toleranzausgleich, um eine gewünschte flächige Anlage der an der Kraftübertragung beteiligten Flächen zu ermöglichen. Durch das Ausgleichselement werden herstellungsbedingte oder eventuell auch betriebsbedingte Maßungenauigkeiten ausgeglichen.

Das Ausgleichssegment weist hierzu vorzugsweise eine kreissegmentartige Querschnittsfläche auf. Das Ausgleichssegment ist daher etwa halbzylindrisch ausgebildet und weist eine teilzylindrische sowie eine ebene Anlagefläche auf. Weiterhin ist vorgesehen, dass das Ausgleichselement einen zylindrischen Befestigungsschaft aufweist, mit dem es in eine als Bohrung ausgebildete Schaftaufnahme in der Aufnahmetasche eingesteckt ist, wobei eine Drehbarkeit des Ausgleichselements innerhalb der Schaftaufnahme ermöglicht ist. Das Ausgleichselement ist hierbei vorzugsweise in einem Eckbereich der prismatischen Kupplungselemente angeordnet, und zwar insbesondere in dem Eckbereich, der die Außenanlageflächen mit den Mitnehmerflächen verbindet. Um die freie Drehbarkeit zu ermöglichen ist weiterhin in zweckdienlicher Ausgestaltung vorgesehen, dass die Aufnahmetasche eine Ecklochbohrung aufweist und der Mitnehmerzapfen in dem korrespondierenden Eckbereich abgeflacht ist. Aufgrund der Ecklochbohrung ist eine ausreichende Drehbewegung des Ausgleichselements ermöglicht.

Das Ausgleichselement und zumindest eines der Kupplungselemente bestehen hierbei vorzugsweise aus unterschiedlich hartem Material. Das Ausgleichselement kann weicher oder auch härter als das zumindest eine Kupplungselement sein. Durch die unterschiedliche Materialhärte wird eine zusätzliche Anpassung und ein zusätzlicher Toleranzausgleich durch eine plastische Verformung ermöglicht.

Um eine sichere Befestigung der beiden Teile aneinander in der gewünschten Lage zu gewährleisten ist gemäß einer zweckdienlichen Weiterbildung eine Spanneinrichtung vorgesehen, die von der Seite betätigbar ist, und über die der Mitnehmerzapfen mit der Aufnahmetasche verspannbar ist. Unter verspannen wird hierbei insbesondere eine Verspannung sowohl in Umfangsrichtung als auch in Axialrichtung verstanden, so dass die beiden Kupplungselemente in ihre Solllage zueinander gebracht werden. Diese Spanneinrichtung wird vorzugsweise alternativ zu der bereits beschriebenen Spannschraube eingesetzt, die im Wesentlichen in axialer Richtung orientiert ist und von der Stirnseite aus betätigt wird. Die seitliche Spanneinrichtung, die also von der Mantelfläche des Drehwerkzeugs aus betätigbar ist und in radialer oder auch in annähernd tangentialer Richtung im Drehwerkzeug orientiert ist weist den Vorteil auf, dass keine Modifikationen am Frontteil vorgenommen werden müssen.

Zweckdienlicherweise ist für die Ausbildung der Spanneinrichtung am Mitnehmerzapfen ein sich in Längsrichtung erstreckender Spannzapfen angeordnet, der in eine Zapfenaufnahme der Aufnahmetasche eintaucht. Zusätzlich ist ein Spannelement vorgesehen, welches auf den Spannzapfen seitlich einwirkt, um den Mitnehmerzapfen mit der Aufnahmetasche zu verspannen. Durch die zusätzliche Anordnung des Spannzapfens ist eine Entkopplung der Spanneinrichtung von dem Mitnehmerzapfen erreicht. Der Mitnehmerzapfen wird daher nicht geschwächt. Vorzugsweise liegt der Spannzapfen in der Zapfenaufnahme spannungsfrei ein, selbst im verspannten Zustand zwischen der Aufnahmetasche und dem Mitnehmerzapfen. Auch im verspannten Zustand weist daher der Spannzapfen ein Spiel zur Zapfenaufnahme auf. Zweckdienlicherweise ist der Spannzapfen hierbei asymmetrisch und außer der Mitte an der Unterseite des Mitnehmerzapfens angeordnet.

Vorzugsweise alternativ zu der Ausgestaltung mit dem Spannzapfen weist die Spanneinrichtung ein in einem der Kupplungselemente verstellbar gelagertes Element, beispielsweise ein Gewindeelement wie einen Gewindestift oder einen Bolzen auf, wobei das Element sich mit einer seiner Stirnseiten zum Verspannen an dem anderen Kupplungselement abstützt. Bei der Ausgestaltung als Gewindestift wird dieser daher in das jeweilige Kupplungselement hinein- bzw. herausgedreht, bis sich der Gewindestift an dem anderen Kupplungselement abstützt und somit die beiden Kupplungselemente gegeneinander verspannt. Auch diese Spanneinrichtung ist wiederum derart ausgebildet, dass sowohl ein Verspannen in Umfangs- als auch in Axialrichtung erfolgt.

Zweckdienlicherweise ist das Element in einem Durchgangsloch des einen Kupplungselements verstellbar gelagert, so dass das Element auch mit seiner zweiten Stirnseite am anderen Kupplungselement abstützbar ist. Dies dient zum Lösen der Mitnehmerverbindung bei miteinander verspannten Kupplungselementen.

### Beschreibung der Figuren

Ausführungsbeispiele der Erfindung werden im Folgenden anhand der Figuren näher erläutert. Diese zeigen in teilweise schematischer Darstellung:
- Fig. 1: eine perspektivische ausschnittsweise Darstellung eines modularen Bohrwerkzeugs,
- Fig. 2: eine perspektivische Ansicht der Rückseite eines Bohrkopfes des Bohrwerkzeugs gemäß Fig. 1 mit Mitnehmerzapfen einer ersten Ausführungsvariante,
- Fig. 3: eine perspektivische Aufsicht auf die vordere Stirnseite eines Bohrkörpers des Bohrwerkzeugs gemäß Fig. 1 mit Aufnahmetaschen der ersten Ausführungsvariante,
- Fig. 4a - c: eine schematische Aufsicht auf die Mitnehmerverbindung zwischen dem Bohrkörper und dem Bohrkopf (Fig. 4a) einer zweiten Ausführungsvariante sowie ausschnittsweise Schnittansichten zu den in der Fig. 4a eingezeichneten Schnittlinien 4b-4b bzw. 4c-4c,
- Fig. 5: eine schematische Aufsicht auf die Mitnehmerverbindung der ersten Ausführungsvariante,
- Fig. 6: eine schematische Aufsicht auf die Mitnehmerverbindung ähnlich den Fig. 4a und Fig. 5 einer dritten Ausführungsvariante,
- Fig. 7: eine perspektivische Ansicht des Bohrkopfes auf den Mitnehmerbereich gemäß der dritten Ausführungsvariante,
- Fig. 8: eine perspektivische Aufsicht auf den Mitnehmerbereich des Bohrkörpers gemäß der dritten Ausführungsvariante,
- Fig.9a,b: eine Aufsicht (Fig. 9a) auf die Stirnseite des Bohrkörpers sowie eine Schnittansicht durch den Bohrerkopf (Fig. 9b), wobei die Schnittebene bestimmt ist durch die Schnittlinie 9b-9b in der Fig. 9a,
- Fig. 10: eine perspektivische Ansicht auf die Mitnehmerverbindung des Bohrerkopfs gemäß einer vierten Ausführungsvariante,
- Fig. 11: eine schematische Aufsicht auf die Mitnehmerverbindung gemäß einer fünften Ausführungsvariante, die eine Kombination der dritten und vierten Ausführungsvariante bildet,
- Fig. 12: eine perspektivische Ansicht auf den Mitnehmerbereich des Bohrerkopfs gemäß einer sechsten Ausführungsvariante,
- Fig. 13: eine schematische Aufsicht auf die Mitnehmerverbindung gemäß der sechsten Ausführungsvariante,
- Fig. 14: eine teilweise Schnittansicht im Bereich eines Spannzapfens gemäß der sechsten Ausführungsvariante entlang der Schnittlinie 14-14 in Fig. 13.

Gleichwirkende Teile sind in den Fig. mit gleichen Bezugszeichen versehen. Die Mitnehmerverbindung wird nachfolgend anhand eines Bohrwerkzeugs in unterschiedlichen Ausführungsvarianten beschrieben. Die Mitnehmerverbindung lässt sich allgemein auch auf andere Zerspanungswerkzeuge zum Koppeln von zwei Teilen eines Werkzeugs übertragen. Die einzelnen zu den verschiedenen Varianten nachfolgend beschriebenen Merkmale und konstruktiven Ausgestaltungen lassen sich- soweit sie sich nicht ausschließen - auch miteinander kombinieren.

### Beschreibung der Ausführungsbeispiele

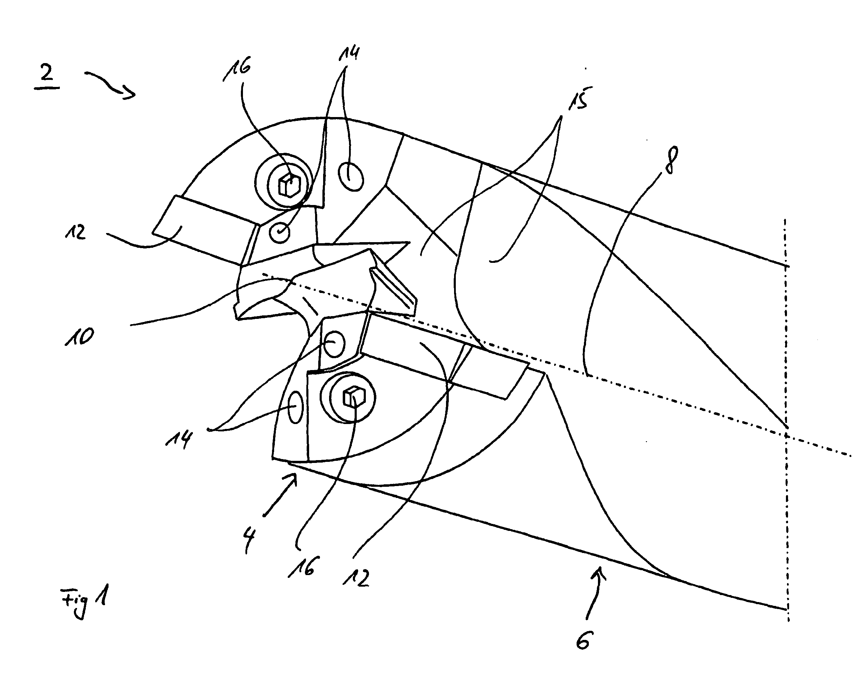

Das in der Fig. 1 dargestellte Bohrwerkzeug 2 ist modular aufgebaut und umfasst einen den Frontteil bildenden Bohrerkopf 4, der austauschbar an einem den Aufnahmeteil bildenden Bohrerkörper 6 befestigt ist. Das Bohrwerkzeug 2 erstreckt sich in Axial- oder Längsrichtung entlang einer Mittenachse 8. Im Ausführungsbeispiel weist der Bohrerkopf 4 eine als Schneideinsatz ausgebildete zentrale Bohrerspitze 10 sowie zwei radial außenseitig angeordnete Schneidplatten 12 auf. An der vorderen Stirnseite des Bohrerkopfs 4 sind insgesamt vier Austrittsöffnungen 14 für Kühlmittel zu erkennen. Die Schneidplatten 12 sind mit ihrer freien Flachseite zu einer Spannut 15 hin orientiert, die im Bohrerkopf 4 beginnt und im Bohrerkörper 6 als gewendelte Spannut 15 weitergeführt wird. Der Bohrerkopf 4 ist mit Hilfe von Spannschrauben 16, die von der Stirnseite her durch den Bohrerkopf 4 durch diesen geführt sind, mit dem Bohrerkörper 6 verschraubbar.

Der Bohrerkopf 4 und der Bohrerkörper 6 sind über eine Mitnehmerverbindung lösbar aneinander befestigt.

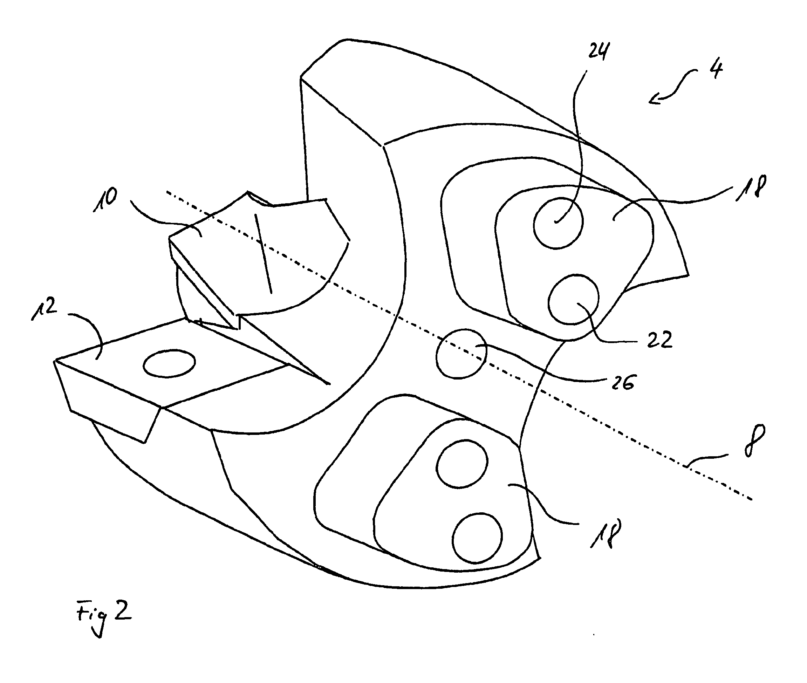

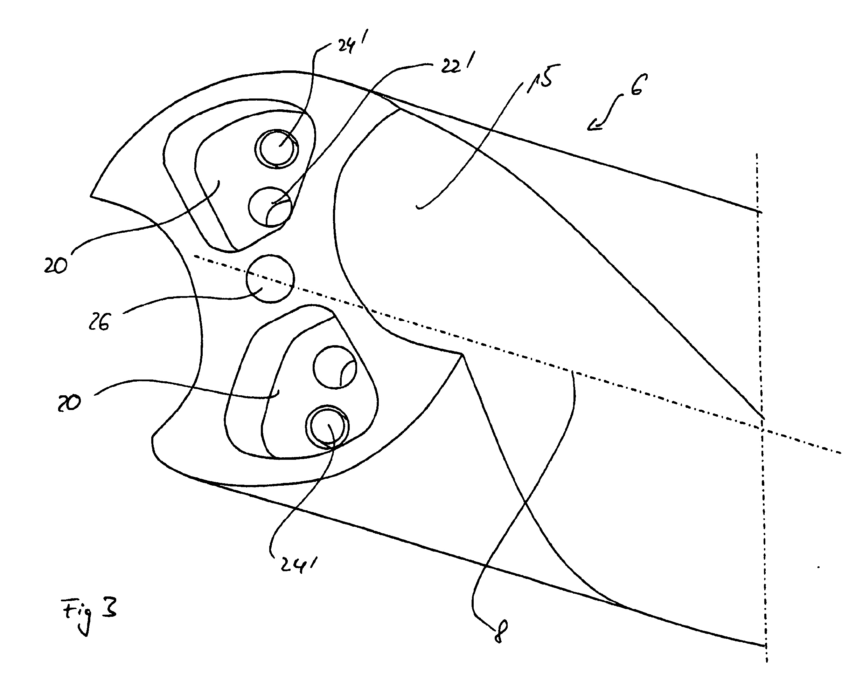

Wie aus den Fig. 2 und 3 hervorgeht, umfasst die Mitnehmerverbindung zwei Mitnehmerzapfen 18, die an der Unterseite des Bohrerkopfs 4 beabstandet voneinander und außermittig zu der Mittenachse 8 angeordnet sind. Im zusammengebauten Zustand greifen die Mitnehmerzapfen in eine jeweilige, korrespondierende Aufnahmetasche 20 des Bohrerkörpers 6. Die Mitnehmerzapfen 18 sind ausgehend von der bodenseitigen Flachseite des Bohrerkopfs 4 als prismenartige Erhebungen ausgebildet. In gleicher Weise sind die Aufnahmetaschen 20 von einer ebenen Stirnfläche des Bohrerkörpers 6 ausgehend als prismenartige Vertiefungen ausgebildet. Die Mitnehmerzapfen 18 sind jeweils von einer Kühlmittelbohrung 22 sowie von einer Befestigungsbohrung 24 durchsetzt, die jeweils mit zugeordneten Bohrungen 22', 24' in der ebenen Bodenfläche der Aufnahmetasche 20 fluchten. Die Kühlmittelbohrungen 22, 22' werden in hier nicht näher dargestellter Weise von einem zentralen Kühlmittelkanal 26 gespeist.

Die Mitnehmerzapfen 18 sind jeweils begrenzt durch eine Stirnfläche, die in einer Ebene senkrecht zur Mittenachse 8 liegt sowie durch eine Umfangs- oder Mantelfläche, die achsparallel zur Mittenachse orientiert ist. Komplementär hierzu sind auch die jeweiligen Aufnahmetaschen 20 ausgebildet.

Von besonderer Bedeutung ist die getrennte Ausgestaltung der beiden Mitnehmerzapfen 18 und ihre vollständige, allseitig umschließende Aufnahme in den Aufnahmetaschen 20. Die Mitnehmerzapfen 18 sowie die Aufnahmetaschen 20 weisen eine spezielle nachfolgend noch weiter erläuterte Geometrie auf. Die Querschnittsfläche - senkrecht zu Mittenachse - eines jeden Kupplungselements 18, 20 ist durch eine Asymmetrie geprägt. Diese sorgt dafür, dass über die Mitnehmerverbindung eine sehr gute Drehmomentübertragung bei möglichst geringer Spannungsbelastung des Bohrkörpers 6 im Bereich der Aufnahmetaschen 20 erfolgt. Zugleich sind die Mitnehmerzapfen 18 in Verbindung mit den Aufnahmetaschen 20 derart geformt und angeordnet, dass eine automatische Selbstzentrierung der beiden Teile 4, 6 zueinander erfolgt. Jeder der Mitnehmerzapfen 18 bildet mit der ihm zugehörigen Aufnahmetasche 20 ein Kupplungspaar, die Mitnehmerzapfen 18 und die Aufnehmertaschen 20 bilden allgemein komplementär zueinander ausgebildete Kupplungselemente, die - bis auf die nachfolgend noch beschriebenen geringfügigen Unterschiede - identische Querschnittsgeometrien aufweisen.

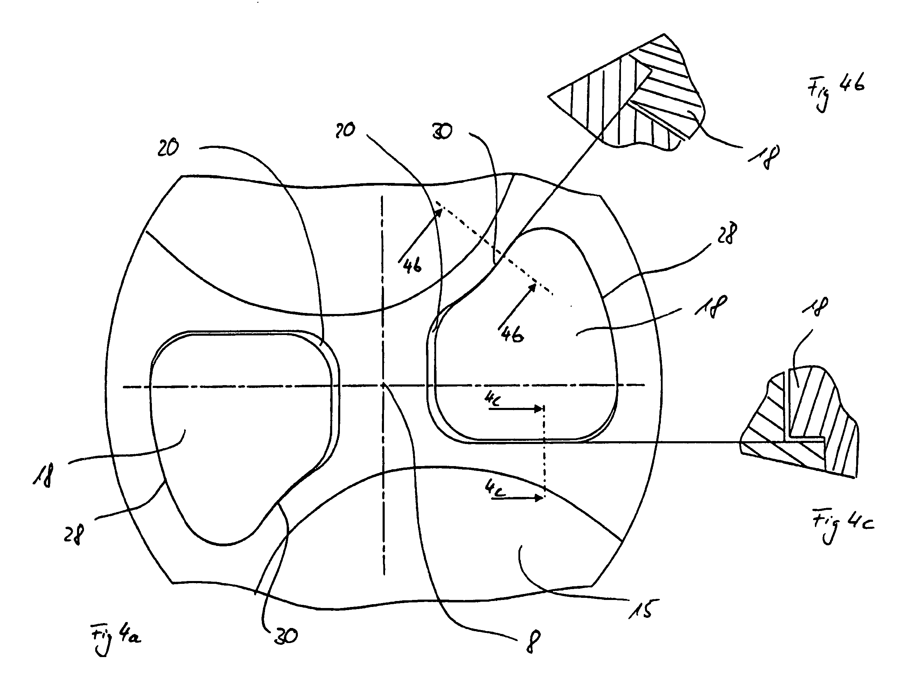

Wie aus Fig. 4a hervorgeht, weisen die Kupplungselemente jeweils eine in etwa polygonale Querschnittskontur (betrachtet in einer Ebene senkrecht zur Mittenachse 8) auf. In den Ausführungsbeispielen weisen die Kupplungselemente 18, 20 jeweils vier Eckbereiche auf, die jeweils gerundet ausgebildet sind. Die Kupplungselemente haben in den Ausführungsbeispielen allgemein eine trapezförmige Querschnittsfläche. Zwischen den einzelnen Eckbereichen sind jeweils Wandabschnitte ausgebildet. Die Fig. 4a zeigt die Mitnehmerverbindung im belasteten Zustand, wenn also die einzelnen Kupplungselemente 18, 20 zur Drehmomentübertragung aneinander anliegen. Wie aus der Fig. 4a zu erkennen ist, liegen in diesem Fall jeweils zwei Wandungsbereiche aneinander an. Der eine Wandungsbereich ist der radial außen liegende Wandungsbereich, in dem die Kupplungselemente 18, 20 über Außenanlageflächen 28 aneinander anliegen. Diese sind gekrümmt ausgebildet und laufen im Ausführungsbeispiel der Fig. 4a konzentrisch zu der äußeren Umfangsseite des Bohrwerkzeugs 2. Die beiden Kupplungselemente 18, 20 liegen weiterhin mit zu den Anlageflächen 28 benachbarten Mitnehmerflächen 30 aneinander an. Diese sind im Ausführungsbeispiel der Fig. 4a im Wesentlichen radial zur Mittenachse 8 orientiert. Die beiden weiteren Wandungsbereiche der Kupplungselemente weisen zueinander jeweils ein Spiel auf, so dass insgesamt die Mitnehmerzapfen 18 mit Spiel in der jeweiligen Aufnahmetasche 20 einliegen. Diese weiteren Wandungsbereiche haben daher bezüglich der Drehmomentübertragung keine Funktion und dienen auch nicht zur Zentrierung der beiden Teile 4, 6 zueinander. Im Ausführungsbeispiel sind diese Wandungsbereiche in etwa senkrecht zueinander orientiert und verlaufen jeweils parallel und beabstandet zu zwei Ebenen, die ebenfalls unter einem rechten Winkel zueinander angeordnet sind und die Mittenachse 8 jeweils in sich aufnehmen.

Wie aus den Schnittdarstellungen der Fig. 4b zu entnehmen ist, liegen die beiden Kupplungselemente 18, 20 im Bereich ihrer Mitnehmerflächen 30 unmittelbar aneinander an. Gleichzeitig ist zu erkennen, dass der Bohrerkopf 4 mit seiner planen Unterseite plan auf der ebenen Stirnfläche des Bohrerkörpers 6 aufliegt. Die Unterseite des Mitnehmerzapfens 18 ist demgegenüber von der Bodenfläche der Aufnahmetasche 20 beabstandet. Aus Fig. 4c ist schließlich noch zu erkennen, dass die nicht an der Drehmomentübertragung beteiligten rückwärtigen Wandungsbereiche der beiden Kupplungselemente 18, 20 voneinander beabstandet sind.

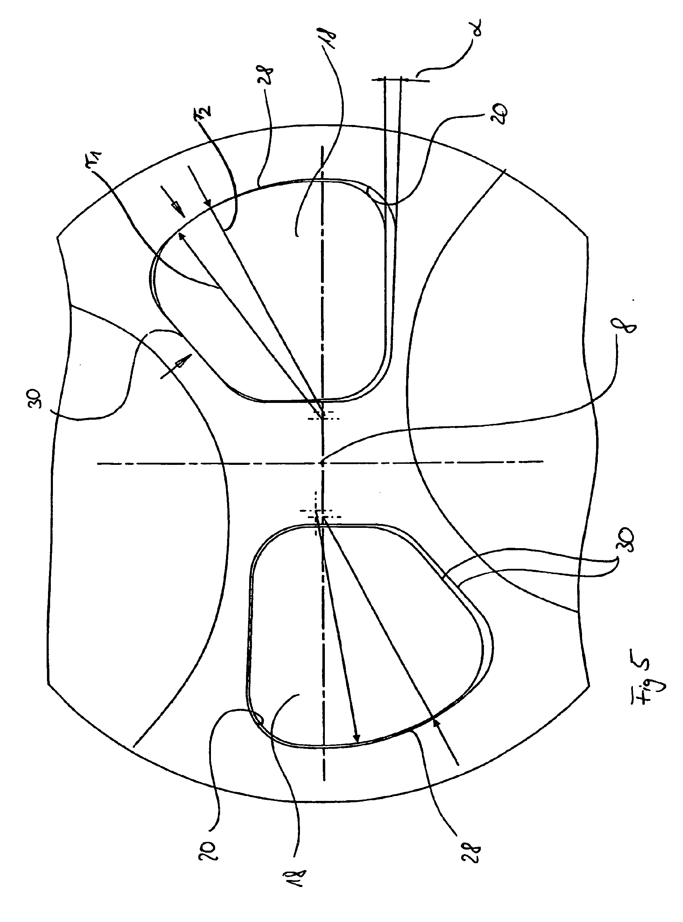

Bei der Montage des Bohrerkopfs 4 an den Bohrkörper 6 werden zunächst die Mitnehmerzapfen 18 in die Aufnahmetaschen 20 eingesteckt. Anschließend wird der Bohrerkopf 4 relativ zum Bohrerkörper 6 geringfügig verdreht, wobei aufgrund dieser Relatiwerdrehung der Bohrerkopf 4 und der Bohrerkörper 6 über die Kupplungselemente 18, 20 miteinander verspannt werden. Zur Erläuterung dieses Vorgangs ist in Fig. 5 auf der linken Bildhälfte das Kupplungspaar in dem nicht verspannten Zustand und auf der rechten Bildhälfte im verspannten Zustand dargestellt. In Fig. 5 ist die Ausführungsvariante dargestellt, wie sie auch in den Fig. 2 und 3 zu entnehmen ist.

In der Fig. 5 sind jeweils die Krümmungsradien r₁, r₂ der Außenanlageflächen 8 des Mitnehmerzapfens 18 (r₁) bzw. der Aufnahmetasche 20 (r₂) eingezeichnet. Wie zu erkennen ist, sind die Mittelpunkte der Krümmungsradien versetzt zueinander angeordnet, so dass insgesamt die Mitnehmerzapfen 18 exzentrisch zu den Aufnahmetaschen 20 angeordnet sind. Durch diese Maßnahme werden bei der Drehbewegung die zueinander korrespondierenden Außenanlageflächen 28 gegeneinander verspannt. Aufgrund der im Ausführungsbeispiel 180° Symmetrie der beiden Kupplungspaare erfolgt bei dieser Drehbewegung die automatische Zentrierung des Bohrerkopfs 4 relativ zum Bohrerkörper 6. Die Kupplungselemente 18, 20 sind hierbei um einen freien Verdrehwinkel α zueinander verdrehbar, der im Bereich von einigen Grad, im Ausführungsbeispiel im Bereich von 2° liegt.

Bis auf diese exzentrische Ausgestaltung sind die beiden Kupplungselemente 18,20 gleichartig, also mit gleicher Querschnittsgeometrie ausgebildet. Zur Ausbildung des Spiels, das aus der linken Bildhälfte der Fig. 5 gut zu erkennen ist, sind lediglich die Mitnehmerzapfen etwas kleiner als die Aufnahmetaschen ausgebildet.

Während im Ausführungsbeispiel der Fig. 4a die Mitnehmerflächen 30 zu dem radial innen liegenden Eckbereich konkav nach Innen gewölbt verläuft, erstrecken sich die Mitnehmerflächen 30 gemäß dem Ausführungsbeispiel gemäß der Fig. 5 im Wesentlichen geradlinig, wobei sie unter einem Winkel von wenigen Grad von der Radialen, die durch die Mittenachse 8 verläuft, abweichen.

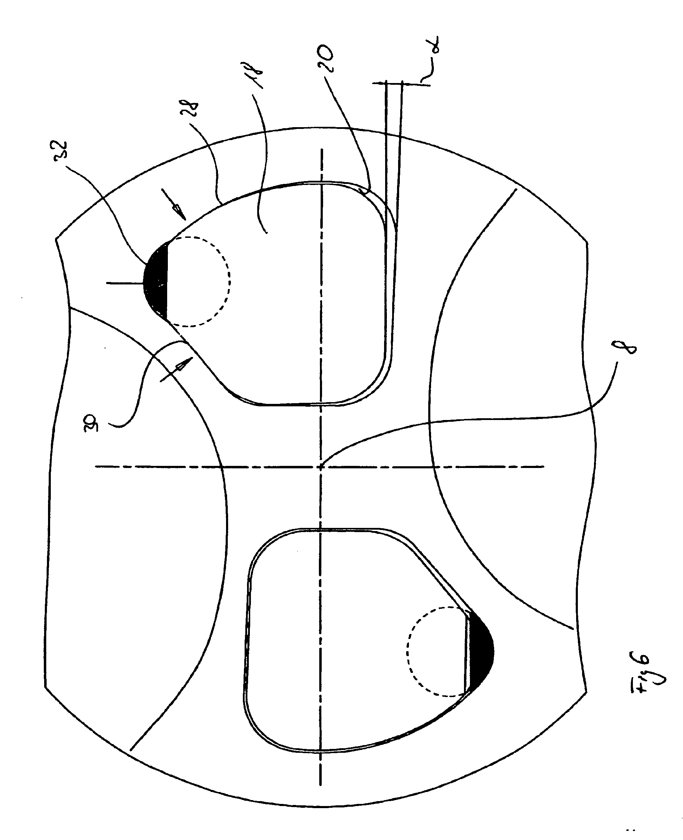

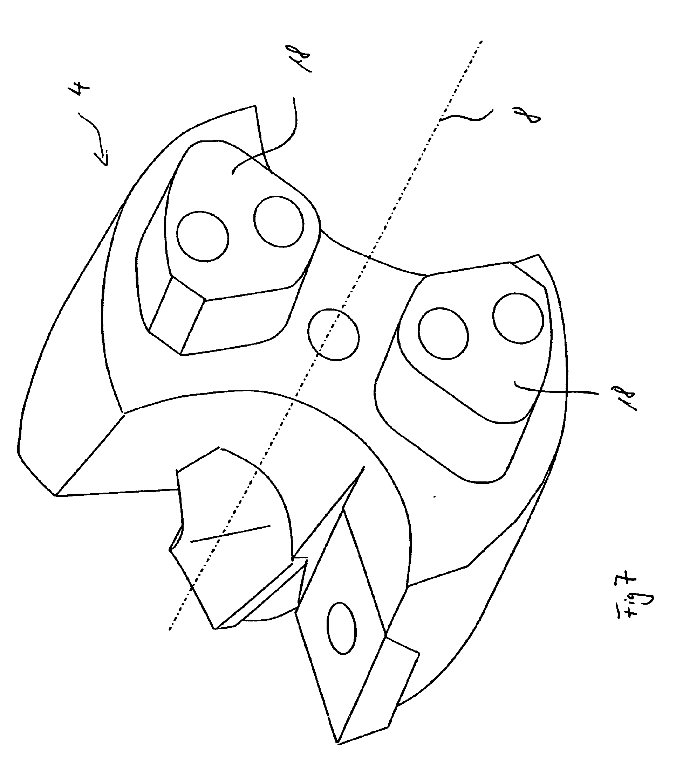

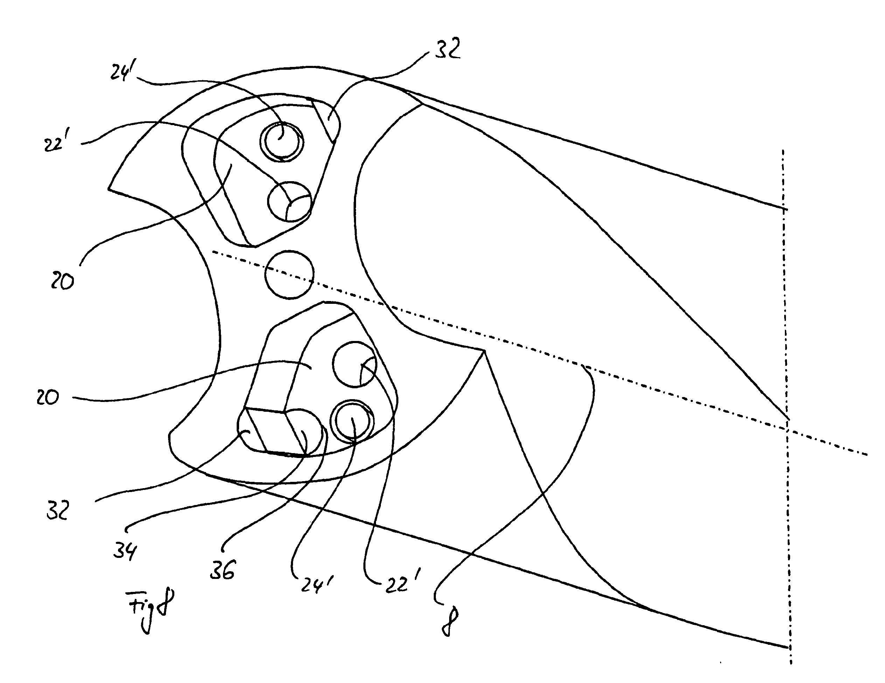

Die in Fig. 6 dargestellte dritte Ausführungsvariante baut auf der Ausführungsvariante gemäß der Fig. 5 auf. Auch hier zeigt die linke Bildhälfte den unverspannten und die rechte Bildhälfte den verspannten Zustand. Im Unterschied zum Ausführungsbeispiel der Fig. 5 ist im Eckbereich, welcher die Mitnehmerflächen 30 mit den Außenanlageflächen 28 verbindet ein Ausgleichselement 32 angeordnet. Das Ausgleichselement 32 ist nach Art eines Passstiftes ausgebildet, erstreckt sich parallel zur Mittenachse 8 und weist im Querschnitt gesehen eine Kreissegmentartige Fläche auf. Aufgrund des Ausgleichselements 32 ist der diesbezügliche Eckbereich des Mitnehmerzapfens 18 abgeflacht ausgebildet, wie aus Fig. 7 am Besten zu erkennen ist. Das Ausgleichselement 32 weist an seinem rückwärtigen Ende einen zylindrischen Befestigungsschaft 34 auf, mit dem es in eine zylindrische Schaftaufnahme 36 (Fig. 8) im Boden der Aufnahmetasche 20 eingesteckt ist. Das Ausgleichselement 32 ist um seine Längsachse in der Schaftaufnahme 36 drehbar.

Das Ausgleichselement 32 ist in dem belasteten Bereich der Kupplungselemente 18, 20, nämlich zwischen den Mitnehmerflächen 30 und den Außenanlageflächen 28 angeordnet. Der Mitnehmerzapfen 18 stützt sich mit seinem abgeflachten Eckbereich an der Flachseite des Ausgleichselements 32 und dieses wiederum mit seiner etwa halbzylindrischen, gerundeten Mantelseite an dem Eckbereich der Aufnahmetasche ab. Der Eckbereich weist hierbei den gleichen Radius wie das Ausgleichselement 32 auf. Aufgrund der Drehbarkeit des Ausgleichselements 32 und der auf der einen Seite abgeflachten und auf der anderen Seite gerundeten Ausbildung passt sich das Ausgleichselement automatisch an die Flachseite des Mitnehmerzapfens 18 an, so dass ein flächenhafter Kontakt zwischen Mitnehmerzapfen 18 und Ausgleichselement 32 ausgebildet wird. Aufgrund der gerundeten Ausbildung, mit dem das Ausgleichselement 32 an der Wandung der Aufnahmetasche 20 anliegt, ist auch hier ein weitgehend flächiger Kontakt gebildet. Insgesamt dient daher das Ausgleichselement 32 zum Ausgleich von Toleranzen, die beispielsweise fertigungsbedingt sind oder auch im Laufe des Betriebs sich ausbilden. Um das Ausgleichselement 32 gegen ein Herausfallen zu sichern, kann dieses beispielsweise mit Hilfe eines Befestigungslacks in der Schaftaufnahme 36 fixiert werden. Die Fixierkraft ist derart bemessen, dass im Lastfall und bei einer notwendigen Verdrehung zum Ausgleich von Toleranzen, das Ausgleichselement 32 sich selbsttätig in die optimale Position dreht.

Der Bohrerkopf 4 wird an dem Bohrerkörper 6 über einen zusätzlichen Spannmechanismus befestigt, so dass der Bohrerkopf in einer definierten Axiallage sowie auch in einer definierten Drehposition in Spann- oder Umfangsrichtung gegen den Bohrerkörper 6 verspannt ist.

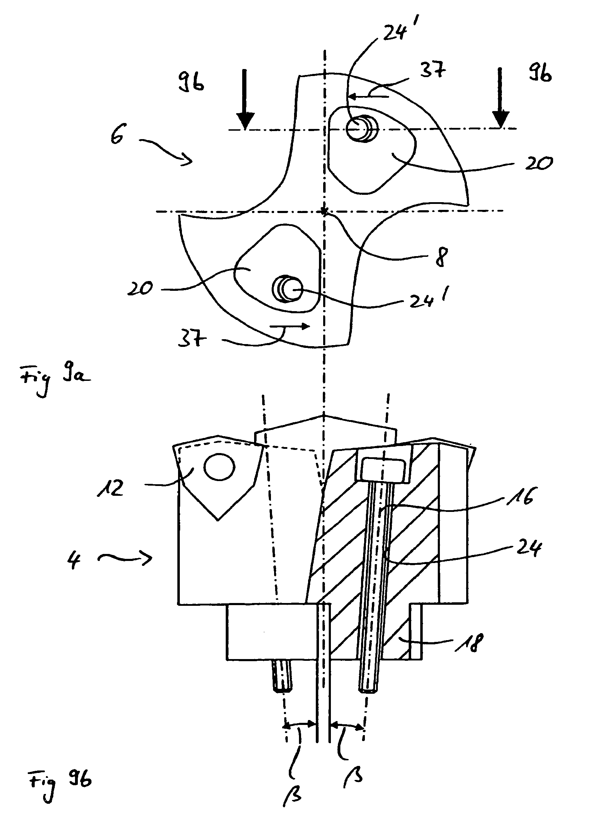

Gemäß einer ersten Ausführungsvariante, die anhand der Fig. 9a, 9b erläutert wird, ist von der vorderen Stirnseite des Bohrerkopfs 4 eine Spannschraube 16 durch den Bohrerkopf 4 hindurchgeführt, die durch die Befestigungsbohrung 24 des Mitnehmerzapfens 18 verläuft und in eine zugeordnete als Schraubenloch ausgeführte Befestigungsbohrung 24' in der Aufnahmetasche 20 eingeschraubt werden kann. Die Befestigungsbohrungen 24, 24' sind nicht achsparallel zur Mittenachse 8, sondern geneigt angeordnet. Die Mittenachse der Befestigungsbohrung 24 verläuft hierbei innerhalb einer Ebene. Diese Ebene ist aufgespannt durch die durch die Axialrichtung und einer Spannrichtung, die in Fig. 9a durch den Pfeil 37 angedeutet ist. Die Spannrichtung 37 ist hierbei definiert durch die Richtung, in der der Mitnehmerzapfen 18 gegen die Aufnahmetasche 20 verspannt ist. Die Spannrichtung ist hierbei vorzugsweise senkrecht zur Mitnehmerfläche 30 orientiert. Die Mittenachse der Befestigungsbohrung ist bezüglich einer in dieser Ebene verlaufenden Parallelen zur Mittenachse 8 (und damit bezüglich der Mitnehmerflächen 30) um einen Neigungswinkel β von > 1 ° im Bereich von 3°-20°und vorzugsweise im Bereich von etwa 10° geneigt. Aufgrund dieser schrägen Orientierung wird der Bohrerkopf 4 sowohl in Axialrichtung als auch in Spannrichtung 37 gegen den Bohrerkörper 6 verspannt.

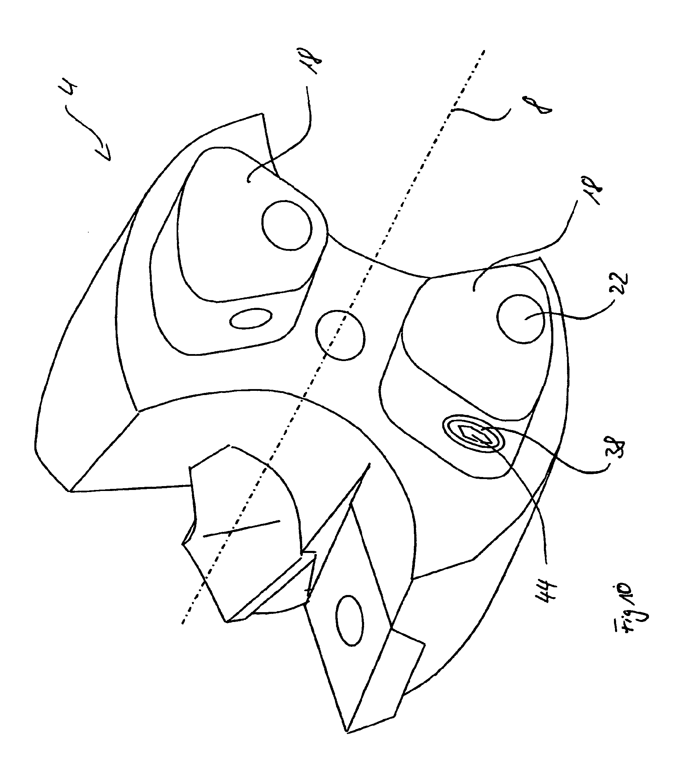

Alternativ zu dieser mit Hilfe der Spannschraube 16 im Wesentlichen in Längsrichtung verlaufenden Verspannung durch den Werkzeugkopf 4 hindurch ist gemäß einer bevorzugten Alternative eine seitliche Spanneinrichtung vorgesehen. Diese ist von der Umfangsseite des Bohrerkörpers 6 her betätigbar. Der besondere Vorteil ist darin zu sehen, dass keine den Bohrerkopf 4 schwächenden Durchbohrungen für die Spannschraube 16 vorgesehen sein müssen. Diese seitliche Spanneinrichtung wird in zwei unterschiedlichen Ausführungsvarianten nachfolgend im Zusammenhang mit den Fig. 10 bis 14 näher erläutert.

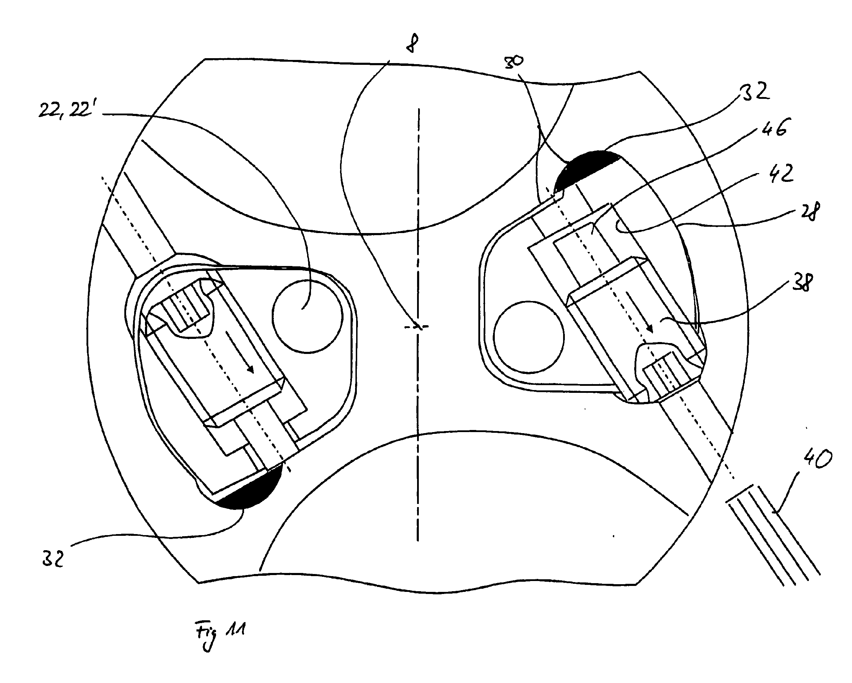

Bei der ersten Ausführungsvariante, die anhand der Fig. 10 und 11 erläutert wird, umfasst die Spanneinrichtung einen Gewindestift 38, der mit Hilfe eines Werkzeugs 40 in einer entsprechenden Gewindebohrung im jeweiligen Mitnehmerzapfen 18 verstellbar ist. Hierzu weist der jeweilige Mitnehmerzapfen 18 eine Durchgangsbohrung 42 auf, die zumindest in einem Teilbereich mit einem hier nicht näher dargestellten innengewinde versehen ist. Der Gewindestift 38 weist an seiner von Außen zugänglichen, rückwärtigen Stirnseite eine Aufnahme 44 für das Werkzeug 40 auf, die im Ausführungsbeispiel als innensechskant ausgeführt ist (Fig. 10). An seiner gegenüberliegenden Stirnseite ist ein Zapfen 46 angeformt. Zum Verspannen der beiden Kupplungselemente wird der Gewindestift 38 aus der Durchgangsbohrung 40 etwas herausgedreht, so dass der Gewindestift 38 sich mit einem Teilbereich seiner rückseitigen Stirnfläche an dem Wandungsbereich der Aufnahmetasche 20 abstützt und somit den Mitnehmerzapfen 18 in die gewünschte Richtung verspannt. Der Gewindestift 38 ist an seiner rückwärtigen Stirnfläche in etwa kalottenförmig ausgebildet. Komplementär hierzu ist auch der Wandungsbereich der Aufnahmetasche 20 kalottenförmig ausgebildet, so dass neben der Verspannung in etwa in Umfangsrichtung auch eine Verspannung in Axialrichtung erfolgt.

Für einen Wechsel des Bohrerkopfs 4 wird der Gewindestift 38 eingedreht, bis der Zapfen 46 sich am gegenüberliegenden Wandungsbereich der Aufnahmetasche 20 abstützt und somit die Verspannung zwischen den Kupplungselementen wieder löst, so dass der Bohrerkopf 4 entnommen werden kann.

Aus der Fig. 11 ist ergänzend noch ein weiteres Merkmal betreffend das Ausgleichselement 32 zu entnehmen. Und zwar ist - wie aus der linken Bildhälfte zu erkennen ist - der Eckbereich, in dem das Ausgleichselement 32 angeordnet ist, durch eine Ecklochbohrung in der Aufnahmetasche 20 gebildet, derart, dass eine möglichst freie Drehbarkeit des Ausgleichselements 32 gegeben ist, um eine möglichst flächige Anlage zwischen den Flachseiten des Mitnehmerzapfens 18 und des Ausgleichselements 32 zu erreichen.

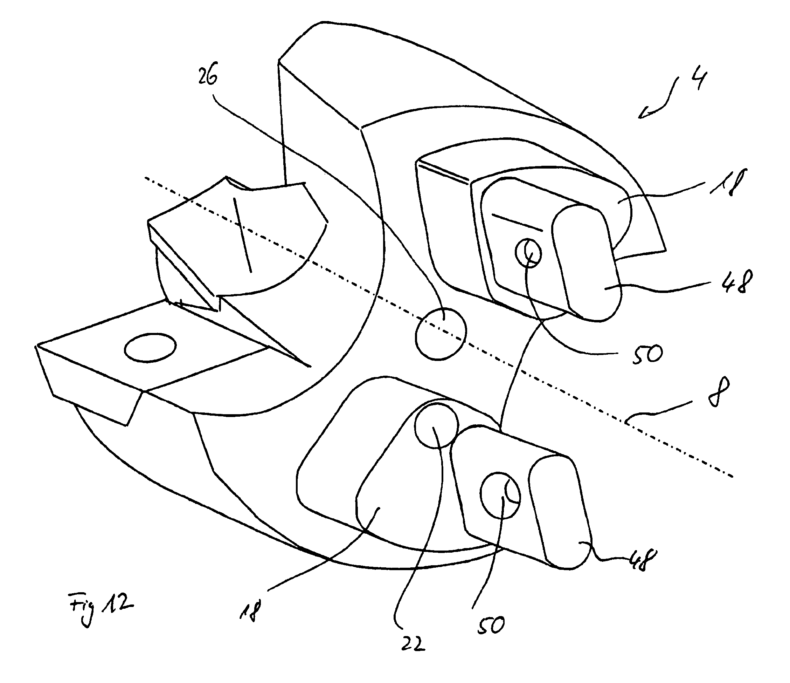

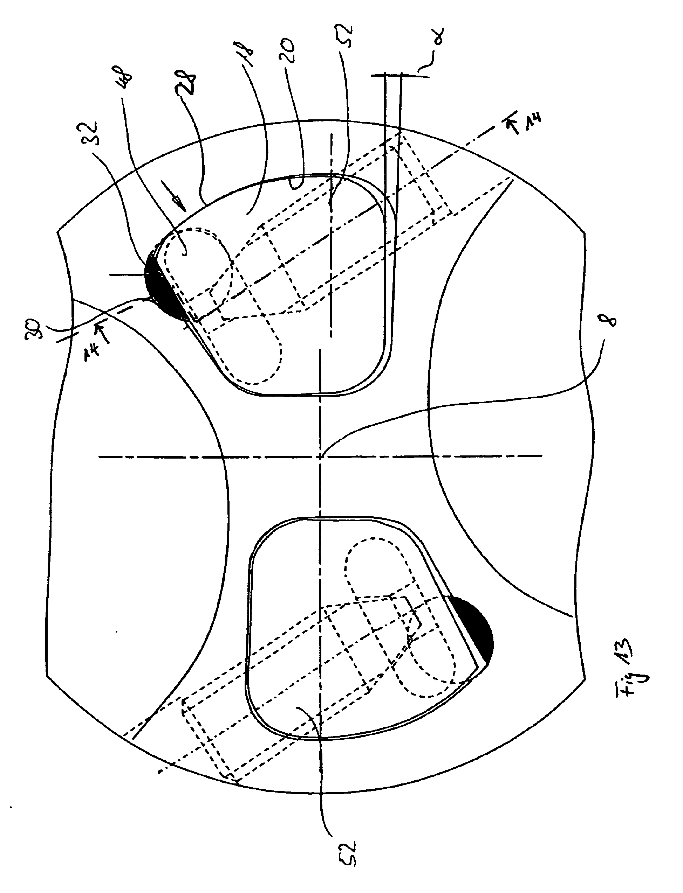

Die zweite Ausführungsvariante der Spannvorrichtung wird nunmehr anhand der Fig. 12 bis 14 näher erläutert. In der Fig. 13 ist auf der linken Bildhälfte wiederum der unverspannte und auf der rechten Bildhälfte der verspannte Zustand zwischen den beiden Kupplungselementen angedeutet. In dieser Ausführungsvariante umfasst der Mitnehmerzapfen 18 zusätzlich jeweils einen Spannzapfen 48, der sich ausgehend von der Bodenseite in Axialrichtung erstreckt. Der Spannzapfen 18 weist im Ausführungsbeispiel eine in etwa rechteckige bis elliptische QuerschnittsKontur auf und ist außerzentrisch an einer Randseite angeordnet.

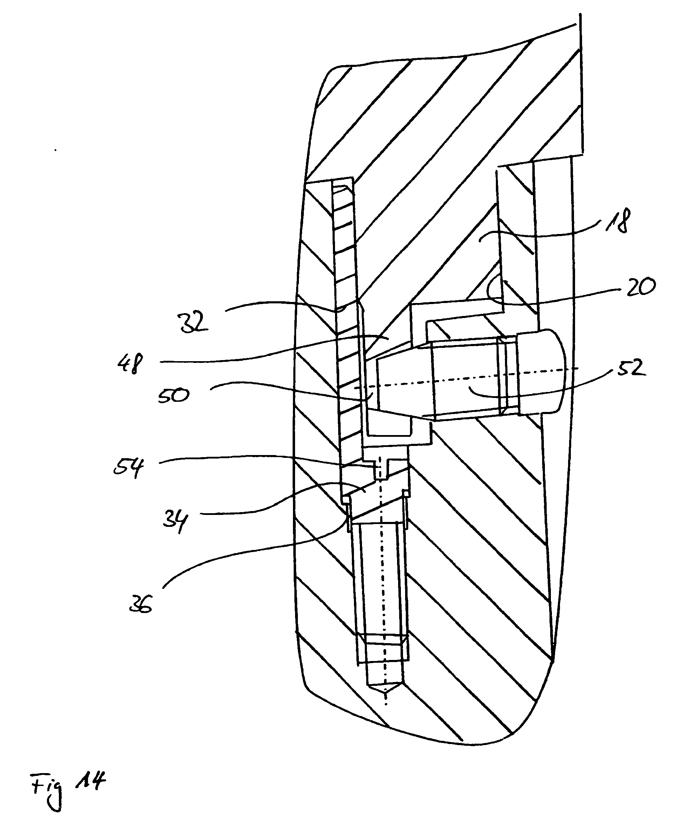

Der Spannzapfen 48 weist eine kegelstumpfförmige Aufnahmeöffnung 50 auf, in die ein als Schraube ausgebildetes Spannelement 52 mit einer ebenfalls kegelstumpfförmigen Spitze eingreift (Fig. 13 und 14). Durch die kegelstumpfförmige, also konisch zulaufende Ausgestaltung der Aufnahmeöffnung 50 und des Spannelements 52 wird neben der Verspannung in Umfangsrichtung zugleich auch eine axiale Kraftkomponente erzeugt, um den Bohrerkopf 4 in Axialrichtung gegen den Bohrkörper 6 zu verspannen.

Aus Fig. 14 ist die Erzeugung der Kraft in Axialrichtung aufgrund der kegelstumpfförmigen Ausgestaltungen noch einmal gut zu erkennen. Aus dieser Fig. ist weiterhin eine schlitzförmige Vertiefung 54 an der oberen Stirnseite des Befestigungsschafts 34 des Ausgleichselements 32 zu erkennen. Diese schlitzförmige Vertiefung 54 erlaubt den Eingriff beispielsweise eines Schraubendrehers, um bei der Erstmontage das Ausgleichselement 32 in eine gewünschte Sollposition drehen zu können.

## Patentansprüche

1. Rotierendes Werkzeug für eine spanende Bearbeitung, insbesondere Bohrwerkzeug (2), mit einem Aufnahmeteil (6) und einem Frontteil (4), die sich entlang einer Mittenachse (8) erstrecken und über eine Mitnehmerverbindung lösbar aneinander befestigbar sind, wobei die Mitnehmerverbindung zumindest zwei voneinander getrennte und bezüglich der Mittenachse (8) exzentrisch angeordnete Kupplungspaare umfasst, wobei jedes Kupplungspaar gebildet ist durch ineinandergreifende Kupplungselemente (18,20), nämlich eine Aufnahmetasche (20) und einen Mitnehmerzapfen (18), wobei die Kupplungselemente (18, 20) derart ausgebildet sind, dass beim Zusammenfügen des Aufnahmeteils (6) und des Frontteils (4) diese über die Kupplungselemente (18,20) zueinander fluchtend ausgerichtet werden, wobei die Kupplungselemente (18,20) eine asymmetrische Querschnittsfläche aufweisen und sich mit zunehmendem Abstand zur Mittenachse (8) verbreitern
**dadurch gekennzeichnet,**
**dass** die Kupplungselemente (18,20) für die Montage ein Spiel zueinander und unterschiedliche Querschnittsgeometrien aufweisen, derart, dass bei einer Relatiwerdrehung der beiden Kupplungselemente (18,20) diese gegeneinander verspannt werden.

2. Werkzeug nach Anspruch 1,
**dadurch gekennzeichnet,**
**dass** der Mitnehmerzapfen (18) nach Art eines Prismas ausgebildet ist.

3. Werkzeug nach Anspruch 1 oder 2,
**dadurch gekennzeichnet,**
**dass** die Kupplungselemente (18,20) radial außenliegende Außenanlageflächen (28) sowie weitere Mitnehmerflächen (30) umfassen.

4. Werkzeug nach Anspruch 3,
**dadurch gekennzeichnet,**
**dass** die Aufnahmetasche (20) einen die Außenanlagefläche (28) umfassenden Außensteg aufweist, der sich in Richtung zu im Lastfall belasteten Bereichen der Außenanlagefläche (28) verbreitert.

5. Werkzeug nach einem der vorhergehenden Ansprüche,
**dadurch gekennzeichnet,**
**dass** die Aufnahmetasche (20) zumindest einen stegartigen elastischen Wandungsbereich umfasst, derart, dass im Lastfall ein Flächenkontakt zwischen dem elastischen Wandungsbereich und einem zugeordneten Flächenabschnitt des Mitnehmerzapfens (18) ausgebildet wird.

6. Werkzeug nach Anspruch 5,
**dadurch gekennzeichnet,**
**dass** bei der Relatiwerdrehung die Außenanlageflächen (28) gegeneinander zum Anliegen kommen.

7. Werkzeug nach Anspruch 6,
**dadurch gekennzeichnet,**
**dass** das Spiel derart gewählt ist, dass die beiden Kupplungselemente (18,20) einen freien Verdrehwinkel (α) im Bereich von 1-5° aufweisen.

8. Werkzeug nach einem der vorhergehenden Ansprüche,
**dadurch gekennzeichnet,**
**dass** der Mitnehmerzapfen (18) zumindest eine Bohrung (22, 24) aufweist, die mit einer korrespondierenden Bohrung (22', 24') in der Aufnahmetasche (20) fluchtet.

9. Werkzeug nach Anspruch 8,
**dadurch gekennzeichnet,**
**dass** die zumindest eine Bohrung (24) zur Aufnahme einer Spannschraube (16) vorgesehen ist, wobei die Bohrung (24) in Umfangsrichtung betrachtet schräg zu einer Parallelen zur Mittenachse (8) orientiert ist, derart, dass beim Anziehen der Spannschraube (16) die beiden Kupplungselemente (18, 20) gegeneinander verspannt werden.

10. Werkzeug nach einem der vorhergehenden Ansprüche,
**dadurch gekennzeichnet,**
**dass** zwischen der Aufnahmetasche (20) und dem Mitnehmerzapfen (18) ein Ausgleichselement (32) angeordnet ist, das flächig sowohl am Mitnehmerzapfen (18) als auch an der Aufnahmetasche (20) anliegt, wobei das Ausgleichselement (32) um seine Längsachse drehbar ist.

11. Werkzeug nach Anspruch 10,
**dadurch gekennzeichnet,**
**dass** das Ausgleichselement (32) eine kreissegmentartige Querschnittsfläche aufweist.

12. Werkzeug nach Anspruch 10 oder 11,
**dadurch gekennzeichnet,**
**dass** das Ausgleichselement (32) einen Befestigungsschaft (34) aufweist, mit dem es in eine Schaftaufnahme (36) in der Aufnahmetasche (20) eingesteckt ist.

13. Werkzeug nach einem der Ansprüche 10 bis 12,
**dadurch gekennzeichnet,**
**dass** das Ausgleichselement (32) und zumindest eines der Kupplungselemente (18,20) aus unterschiedlich hartem Material bestehen.

14. Werkzeug nach einem der vorhergehenden Ansprüche,
**dadurch gekennzeichnet,**
**dass** eine Spanneinrichtung (38, 42; 48,52) vorgesehen ist, die seitlich zur Mittenachse (8) betätigbar ist und über die der Mitnehmerzapfen (18) mit der Aufnahmetasche (20) verspannbar ist.

15. Werkzeug nach Anspruch 14,
**dadurch gekennzeichnet,**
**dass** am Mitnehmerzapfen (18) ein sich in Längsrichtung erstreckender Spannzapfen (48) angeordnet ist, der in eine Zapfenaufnahme der Aufnahmetasche (20) eintaucht und wobei ein Spannelement (52) vorgesehen ist, welches auf den Spannzapfen (48) einwirkt, um den Mitnehmerzapfen (18) mit der Aufnahmetasche (20) zu verspannen.

16. Werkzeug nach Anspruch 14 oder 15,
**dadurch gekennzeichnet,**
**dass** die Spanneinrichtung ein in einem der Kupplungselemente (18) verstellbar gelagertes Element (38) aufweist, welches sich mit einer seiner Stirnseiten zum Verspannen an dem anderen Kupplungselement (20) abstützt.

## Claims

1. Rotating tool for machining, in particular a boring tool (2), comprising a receiving part (6) and a front part (4) which extend along a center axis (8) and can be detachably fastened to one another via a driver connection, wherein the driver connection comprises at least two coupling pairs separate from one another and arranged eccentrically with respect to the center axis (8), wherein each coupling pair is formed by interlocking coupling elements (18, 20), namely a receiving pocket (20) and a driver pin (18), wherein the coupling elements (18, 20) are designed in such a way that the receiving part (6) and the front part (4) are oriented in alignment with one another via the coupling elements (18, 20) when said receiving part (6) and said front part (4) are fitted together, wherein the coupling elements (18, 20) have an asymmetrical cross-sectional area and widen with increasing distance from the center axis (8), **characterized in that** the coupling elements (18, 20), for assembly, have clearance relative to one another and different cross-sectional geometries in such a way that the two coupling elements (18, 20) are clamped against one another during a relative rotation thereof.

2. Tool according to Claim 1, **characterized in that** the driver pin (18) is designed like a prism.

3. Tool according to Claim 1 or 2, **characterized in that** the coupling elements (18, 20) comprise radially outer bearing surfaces (28) and further driver surfaces (30).

4. Tool according to Claim 3, **characterized in that** the receiving pocket (20) has an outer web which comprises the outer bearing surface (28) and widens in the direction of those regions of the outer bearing surface (28) which are loaded in the load case.

5. Tool according to one of the preceding claims, **characterized in that** the receiving pocket (20) comprises at least one web-like elastic wall region in such a way that, in the load case, surface contact is formed between the elastic wall region and an associated surface section of the driver pin (18).

6. Tool according to claim 5, **characterized in that** the outer bearing surfaces (28) come to bear against one another during the relative rotation.

7. Tool according to Claim 6, **characterized in that** the clearance is selected in such a way that the two coupling elements (18, 20) have a free rotation angle (α) within the range of 1-5°.

8. Tool according to one of the preceding claims, **characterized in that** the driver pin (18) has at least one bore (22, 24) which is in alignment with a corresponding bore (22', 24') in the receiving pocket (20).

9. Tool according to Claim 8, **characterized in that** the at least one bore (24) is provided for receiving a clamping screw (16), wherein the bore (24), as viewed in the circumferential direction, is oriented obliquely to a line parallel to the center axis (8) in such a way that the two coupling elements (18, 20) are clamped against one another when the clamping screw (16) is tightened.

10. Tool according to one of the preceding claims, **characterized in that** a compensating element (32) is arranged between the receiving pocket (20) and the driver pin (18), said compensating element (32) bearing against both the driver pin (18) and the receiving pocket (20) in a planar manner, wherein the compensating element (32) is rotatable about its longitudinal axis.

11. Tool according to Claim 10, **characterized in that** the compensating element (32) has a circle-segment-like cross-sectional area.

12. Tool according to Claim 10 or 11, **characterized in that** the compensating element (32) has a fastening shank (34), with which it is inserted into a shank receptacle (36) in the receiving pocket (20).

13. Tool according to one of Claims 10 to 12, **characterized in that** the compensating element (32) and at least one of the coupling elements (18, 20) are made of materials of different hardness.

14. Tool according to one of the preceding claims, **characterized in that** a clamping device (38, 42; 48, 52) is provided which can be actuated laterally relative to the center axis (8) and via which the driver pin (18) can be clamped together with the receiving pocket (20).

15. Tool according to Claim 14, **characterized in that** a longitudinally extending clamping pin (48) is arranged on the driver pin (18), said clamping pin (48) plunging into a pin receptacle of the receiving pocket (20), and wherein a clamping element (52) is provided which acts on the clamping pin (48) in order to clamp the driver pin (18) together with the receiving pocket (20).

16. Tool according to Claim 14 or 15, **characterized in that** the clamping device has an element (38) which is adjustably mounted in one of the coupling elements (18) and which is supported with one of its end faces against the other coupling element (20) for the clamping.

## Revendications

1. Outil rotatif destiné à un usinage par enlèvement de copeaux, en particulier outil de forage (2), avec une partie de montage (6) et une partie de tête (4), qui s'étendent le long d'un axe central (8) et qui peuvent être fixées l'une à l'autre de façon démontable au moyen d'une liaison d'entraînement, dans lequel la liaison d'entraînement comprend au moins deux paires de couplage séparées l'une de l'autre et disposées de façon excentrique par rapport à l'axe central (8), dans lequel chaque paire de couplage est formée par des éléments de couplage (18, 20) engagés l'un dans l'autre, à savoir une cavité de réception (20) et un tenon d'entraînement (18), dans lequel les éléments de couplage (18, 20) sont réalisés de telle manière que, lors de l'assemblage de la partie de montage (6) et de la partie de tête (4), celles-ci soient orientées en alignement l'une avec l'autre au moyen des éléments de couplage (18, 20), dans lequel les éléments de couplage (18, 20) présentent une surface de section transversale asymétrique et s'élargissent à mesure que la distance par rapport à l'axe central (8) augmente, **caractérisé en ce que** les éléments de couplage (18, 20) présentent pour le montage un jeu l'un par rapport à l'autre et des géométries de section transversale différentes, de telle manière que, lors d'un mouvement de rotation relatif des deux éléments de couplage (18, 20), ceux-ci soient bloqués l'un contre l'autre.

2. Outil selon la revendication 1, **caractérisé en ce que** le tenon d'entraînement (18) est réalisé à la manière d'un prisme.

3. Outil selon la revendication 1 ou 2, **caractérisé en ce que** les éléments de couplage (18, 20) comprennent des faces d'appui extérieures (28) situées radialement à l'extérieur ainsi que d'autres faces d'entraînement (30).

4. Outil selon la revendication 3, **caractérisé en ce que** la cavité de réception (20) présente une nervure extérieure entourant la face d'appui extérieure (28), qui s'élargit en direction des zones de la face d'appui extérieure (28) chargées en cas de charge.

5. Outil selon l'une quelconque des revendications précédentes, **caractérisé en ce que** la cavité de réception (20) comprend au moins une zone de paroi élastique en forme de nervure, de telle manière qu'en cas de charge, il s'établisse un contact de surface entre la zone de paroi élastique et une portion de surface associée du tenon d'entraînement (18).

6. Outil selon la revendication 5, **caractérisé en ce que**, en cas de mouvement de rotation relatif, les faces d'appui extérieures (28) viennent s'appliquer l'une contre l'autre.

7. Outil selon la revendication 6, **caractérisé en ce que** le jeu est choisi de telle manière que les deux éléments de couplage (18, 20) présentent un angle de rotation libre (α) de l'ordre de 1-5°.

8. Outil selon l'une quelconque des revendications précédentes, **caractérisé en ce que** le tenon d'entraînement (18) présente au moins un alésage (22, 24), qui est en alignement avec un alésage correspondant (22', 24') dans la cavité de réception (20).

9. Outil selon la revendication 8, **caractérisé en ce que** ledit au moins un alésage (24) est destiné à recevoir une vis de serrage (16), dans lequel l'alésage (24), considéré en direction périphérique, est orienté en oblique par rapport à une parallèle à l'axe central (8), de telle manière que lors du serrage de la vis de serrage (16) les deux éléments de couplage (18, 20) soient bloqués l'un contre l'autre.

10. Outil selon l'une quelconque des revendications précédentes, **caractérisé en ce qu'**un élément de compensation (32) est disposé entre la cavité de réception (20) et le tenon d'entraînement (18) et s'applique à plat aussi bien sur le tenon d'entraînement (18) que sur la cavité de réception (20), dans lequel l'élément de compensation (32) peut tourner autour de son axe longitudinal.

11. Outil selon la revendication 10, **caractérisé en ce que** l'élément de compensation (32) présente une surface de section transversale en forme de segment de cercle.

12. Outil selon la revendication 10 ou 11, **caractérisé en ce que** l'élément de compensation (32) présente une tige de fixation (34), avec laquelle il est engagé dans un logement de tige (36) dans la cavité de réception (20).

13. Outil selon l'une quelconque des revendications 10 à 12, **caractérisé en ce que** l'élément de compensation (32) et au moins un des éléments de couplage (18, 20) se composent d'un matériau de dureté différente.

14. Outil selon l'une quelconque des revendications précédentes, **caractérisé en ce qu'**il est prévu un dispositif de serrage (38, 42; 48, 52), qui peut être actionné latéralement à l'axe central (8) et au moyen duquel le tenon d'entraînement (18) peut être bloqué avec la cavité de réception (20).

15. Outil selon la revendication 14, **caractérisé en ce qu'**un tenon de serrage (48) s'étendant en direction longitudinale est disposé sur le tenon d'entraînement (18) et plonge dans un logement de tenon de la cavité de réception (20), dans lequel il est prévu un élément de serrage (52) qui agit sur le tenon de serrage (48), afin de bloquer le tenon d'entraînement (18) avec la cavité de réception (20).

16. Outil selon la revendication 14 ou 15, **caractérisé en ce que** le dispositif de serrage présente un élément (38) monté de façon déplaçable dans un des éléments de couplage (18), et qui s'appuie sur l'autre élément de couplage (20) avec une de ses faces frontales pour réaliser le blocage.
